# EUROPÄISCHE PATENTANMELDUNG

(11) **EP 2 535 303 A1**
(43) Veröffentlichungstag der Anmeldung: **19.12.2012**
(21) Anmeldenummer: 12172134.4
(22) Anmeldetag: 15.06.2012
(51) Int. Cl.: B65H 75/44, H02G 11/02

(54) **Vorrichtung zum Ab- und Aufwickeln einer oder mehrerer Leitungen**

(30) Priorität: 17.06.2011 LU 91825
(71) Anmelder: Ipalco B.V., 3447 GK Woerden (NL)
(72) Erfinder: Gieseke, Christoph, D-51491 Overath (DE)
(74) Vertreter: Office Freylinger

(57) **Zusammenfassung**

Die Erfindung betrifft eine Vorrichtung (1) zum Ab- und Aufwickeln einer oder mehreren Leitungen (2) zur unterbrechungsfreien Verbindung jeder der einen oder mehreren Leitungen zwischen zwei Verbindungspunkten, wobei die unterbrechungsfreie Verbindung zwischen einem festen ersten Verbindungspunkt (7) und einem variabel entfernten oder jeweils einem von mehreren unterschiedlich entfernten zweiten Verbindungspunkt herstellbar ist. Die Vorrichtung umfasst einen drehbaren Wickelkörper (3) sowie einen koaxial angeordneten flexiblen Leitungsträger (4) der eine Helix bildet und derart angeordnet ist, dass sich zwei gegenläufige Teilhelices (41,43) um einen Wendepunkt (42) ergeben. Dabei wird/werden die Leitung(en) vom ersten festen Verbindungspunkt über ein erstes Ende des Leitungsträgers zu dessen zweiten Ende entlang der Helix und vom zweiten Ende des Leitungsträgers so zur Umfangsseite des Wickelkörpers geführt, dass die Leitung(en), ggf. über eine Anzahl Wicklungen, um den Wickelkörper zum zweiten Verbindungspunkt führen.

## Beschreibung

### Technisches Gebiet

Die vorliegende Erfindung betrifft allgemein Vorrichtungen zum Ab- und Aufwickeln einer oder mehreren Leitungen zur unterbrechungsfreien Verbindung zwischen zwei Verbindungspunkten, insbesondere sogenannte Leitungstrommeln, wie Kabeltrommeln, Schlauchtrommeln, usw.

### Stand der Technik

Vorrichtungen zum Ab- und Aufwickeln einer oder mehreren Leitungen sind allgemein bekannt, haben jedoch je nach Anwendung verschiedene Nachteile.

Sogenannte Kabeltrommeln (eigentlich Leitungsroller) haben z.B. den Nachteil, dass die Stromzufuhr zwar über durchgehende Leitungen erfolgt, zum Ab- oder Aufrollen die Verbindungen zur Trommel jedoch getrennt werden müssen um ein Verdrehen der angeschlossenen Leitungen zu verhindern, da die Steckverbindungen mit der Trommel verbunden sind und so beim Wickelvorgang mitdrehen.

Bei sogenannten Automatik-Kabelrollern oder Zugleitungsrollern ist eine Trennung der Steckverbindungen während dem Ab-, bzw. Aufrollvorgang nicht nötig da innerhalb des Rollers die Verbindung über Schleifringe oder -kontakte erfolgt. Dies führt jedoch prinzipbedingt zu einem erhöhten mechanischen Verschleiß und/oder einer gesteigerten Verschmutzungsanfälligkeit. Auch im Fall von fluidführenden Leitungen muss eine Dichtigkeit der Drehkupplungen über längere Benutzungszyklen gewährleistet sein.

Außerdem ist die Verwendung von Schleifringen oder Drehkupplungen nicht immer durchführbar. Zum einen verbietet sich die Verwendung von Schleifkontakten in manchen Bereichen z.B. in der Signalübertragung, da Schleifkontakte hier zu erheblichen Beeinträchtigungen führen würden. Zum anderen ist eine solche Lösung auch technisch sehr aufwändig in Fällen wo eine größere Anzahl Leitungen über Schleifringe oder Drehkupplungen oder gemischt mehrere elektrische und fluidführende Leitungen zuverlässig zu überbrücken sind. Außerdem ist in diesem Fall eine kompakte und/oder wirtschaftliche Ausführung der Rolle kaum durchführbar.

Um die Benutzung von Schleifkontakten zu umgehen sind außerdem Lösungen bekannt in denen eine Leitung durchgehend über zwei Trommeln geführt wird, wobei eine fest steht und eine drehbar angeordnet ist. Beim Abwickeln des nutzbaren Teils der Leitung von der drehbaren Trommel wickelt sich ein anderer Teil der Leitung um die feststehende Trommel auf. Obwohl solche Lösungen kein Abstecken der Verbindungen während dem Wickelvorgang benötigen, bereitet insbesondere das Aufwickeln auf der feststehenden Trommel oft Probleme durch Verwerfungen und Schlaufenbildung der Leitung. Außerdem scheinen solche Vorrichtungen für die Führung mehrerer Leitungen ungeeignet.

Schlussendlich wäre es im Hinblick auf die immer umfangreichere Mess-, Kontroll- und Automatisierungstechnik wünschenswert, dass zu den klassischen Anwendungsleitungen zusätzlich (ggf. auch nachträglich) Informations- oder Signalleitungen in einer einzigen Vorrichtung mitgeführt werden könnten.

### Aufgabe der Erfindung

Eine Aufgabe der vorliegenden Erfindung ist es demnach, eine Vorrichtung zum Ab- und Aufwickeln einer oder mehreren Leitungen zur unterbrechungsfreien Verbindung zwischen zwei Verbindungspunkten zur Verfügung zu stellen die keine Trennung der Leitungen während des Ab- oder Aufwickelvorgangs benötigt und gleichzeitig eine kompakte Ausführung erlaubt.

### Allgemeine Beschreibung der Erfindung

Diese Aufgabe wird erfindungsgemäß gelöst durch eine Vorrichtung zum Ab- und Aufwickeln einer oder mehreren Leitungen zur unterbrechungsfreien Verbindung jeder der einen oder mehreren Leitungen zwischen zwei Verbindungspunkten, wobei die unterbrechungsfreie Verbindung zwischen einem festen ersten Verbindungspunkt und einem variabel entfernten oder jeweils einem von mehreren unterschiedlich entfernten zweiten Verbindungspunkt herstellbar ist. Die Vorrichtung umfasst einen drehbaren Wickelkörper sowie einen koaxial angeordneten, flexiblen Leitungsträger, der eine Helix (mit einer Anzahl n Windungen) bildet und derart angeordnet ist, dass sich zwei gegenläufige Teilhelices um einen Wendepunkt ergeben. Die Leitung(en) wird bzw. werden dabei vom ersten festen Verbindungspunkt über ein erstes, feststehendes (nichtdrehendes) Ende des Leitungsträgers zu dessen zweiten, am Wickelkörper befestigten Ende entlang der Helix, von diesem zweiten Ende des Leitungsträgers zu einer Umfangsseite des Wickelkörpers und ggf. über eine Anzahl Wicklungen um den Wickelkörper zum zweiten Verbindungspunkt geführt.

Die erfindungsgemäße Vorrichtung erlaubt es eine oder mehrere Leitungen platzsparend auf- und abzuwickeln je nach Bedarf ohne Entfernen, bzw. Verdrehen der daran befestigten Verbindungsleitungen. Die Verwendung des Leitungsträgers mit den darüber geführten Leitungen ermöglicht weiterhin durch seine Anordnung die Drehung des Wickelkörpers auszugleichen ohne Überdrehung der Leitungen. Ein wesentlicher Vorteil der Erfindung ist, dass darüber hinaus auch keine Verwerfungen und Schlaufenbildung entstehen können, was die Zuverlässigkeit und die Betriebssicherheit der Vorrichtung auch über längere Betriebszyklen deutlich erhöht.

Bevorzugt ist der helixförmige Leitungsträger als flexibles Band ausgebildet. Das Material des Leitungsträgers kann aus Vollmaterial oder Gewebe bestehen, wobei vorzugsweise Kunststoff, bzw. Kunststofffasern eingesetzt werden. Der Leitungsträger kann sowohl einstückig ausgeführt sein als auch aus mehreren zusammensetzbaren Einzelelementen bestehen. Beim Einsetzen in die Vorrichtung wird der helixförmige Leitungsträger an einer Seite so umgebogen, dass ein Wendepunkt innerhalb der (jetzt teilinvertierten) Helix entsteht.

Das Ab- und Aufwickeln einer oder mehreren Leitungen bedeutet in der Praxis, dass die Leitungen prinzipbedingt nur zu einem (sogenannten nutzbaren) Teil ihrer gesamten Länge ab- und aufwickelbar sind. Dieser nutzbare Teil entspricht im wesentlichen dem im Bereichs des Wickelkörpers befindlichen Abschnitts der Leitungen wenn die Leitungen darauf vollständig aufgewickelt sind.

Eine unterbrechungsfreie Verbindung im Sinne der Erfindung bedeutet, dass die Leitungen innerhalb der Vorrichtung nicht durch Verbindungselement, wie Schleifkontakte, Drehkupplungen oder ähnliches unterbrochen sind, sondern durchgehend vom ersten zum zweiten Verbindungspunkten ausgeführt sind.

Die entlang dem Leitungsträger geführte(n) Leitung(en) ist/sind mindestens abschnittsweise mit dem Leitungsträger solidarisiert, üblicherweise ist/sind sie in bevorzugt regelmäßigen Abständen am Leitungsträger befestigt. Die Befestigung dieser Leitungen am Leitungsträger kann einzeln oder mehrere gleichzeitig mittels bekannten Befestigungsmitteln oder Arretierungen erfolgen, z.B. mittels Bügel, Schleifen, Rastmittel und/oder Brücken. Auch stoffschlüssige Verbindung durch Kleben, Verschweißen, usw., bevorzugt durch Punktkleben, Punktverschweißen.

Durch die besondere Anordnung des Leitungsträgers in Form einer teilinvertierten Helix wird das Drehen eines Leitungsendes relativ zum anderen ermöglicht ohne die Leitung(en) zu beschädigen und ohne Gefahr zu laufen durch unerwünschte Verwerfungen und Schlaufenbildung die Vorrichtung unbrauchbar zu machen. Durch die Drehung des drehbaren Endes der Helix, d.h. in der Praxis durch Drehen des Wickelkörpers während dem Ab- oder Aufwickeln, bewegt sich der Wendepunkt der teilinvertierten Helix relativ zu den jeweiligen Enden des Leitungsträgers. Im aufgewickelten Zustand, d.h. wenn die Leitung(en) auf dem Wickelkörper aufgerollt ist/sind, befindet sich der Wendepunkt der teilinvertierten Helix in der Nähe des zweiten Endes des Leitungsträgers. Wird/werden jetzt die Leitung(en) abgerollt, dreht sich das zweite Ende mit dem Wickelkörper und der Wendepunkt bewegt sich entlang der Helix in Richtung des ersten Endes. Dabei beschreibt der Wendepunkt im Prinzip eine helixförmige Bahn um die Achse der Helix: bei jeder Umdrehung des Wickelkörpers bewegt sich dieser Wendepunkt eine halbe Umdrehung entlang der Helix. Somit erreicht man, dass pro Windung der Helix ca. zwei Umdrehungen des Wickelkörpers ermöglicht werden.

Der mittlere (effektive) Durchmesser des Wickelkörpers (D) bestimmt die Länge der abwickelbaren Leitung pro Umdrehung, während der mittlere (effektive) Durchmesser der Helix (d) größtenteils von dem minimalen Biegeradius der Leitung(en), sowie der gewünschten Anzahl und Durchmesser der Leitungen vorgegeben wird. Der mittlere Durchmesser des Wickelkörpers (D) wird daher in der Praxis bevorzugt relativ groß zum mittleren Durchmesser des Leitungsträgers (d) gewählt, z.B. 1,1 d < D < 100 d oder mehr, bevorzugt 1,5 d < D < 50 d, ganz besonders bevorzugt 2 d < D < 25 d.

Die Breite des Leitungsträgers wird bevorzugt so gewählt, dass mindestens die gewünschte Anzahl Leitungen untergebracht werden kann. Ein weiterer Vorteil der Erfindung ist es, dass es sogar möglich ist ohne größeren Aufwand nachträglich weitere Leitungen einzufügen, wenn der Leitungsträger ausreichend dimensioniert ist.

In einer bevorzugten Ausführungsform ist der Wickelkörper als hohler Zylinder, bevorzugt als Trommel ausgebildet. Dabei wird der koaxial angeordnete flexible Leitungsträger seitlich versetzt (außerhalb) oder platzsparender innerhalb dieses Zylinders angeordnet.

Leitungen im Sinne der Erfindungen sind energie-, informations-/signal-(z.B. galvanisch oder optisch) oder stoffführende Leitungen, z.B. ein- oder mehradrige Elektrokabel, ein- oder mehradrige optische Kabel (Lichtleiter), ein- oder mehrfach Gas-, Flüssigkeits- oder Feststoff(druck)schläuche, usw. Bei mehradrigen oder mehrfach Leitungen können die Adern oder Kanäle parallel, verdrillt oder koaxial verlaufen. Im Sinne dieser Erfindung kann je nach Kontext der Begriff "Leitung" sowohl die einzelne "Ader" als auch die mehradrige oder mehrkanalige Leitung selbst, z.B. einen Elektrokabel, bezeichnen.

Der Führung mehrerer Leitungen in der Vorrichtung sind somit im Prinzip keine Grenzen gesetzt und die Vorrichtung ist deshalb sehr vielseitig einsetzbar. Mehrere Leitungen können demzufolge (wenigstens abschnittweise) parallel, verdrillt, koaxial oder gemischt parallel, verdrillt und/oder koaxial je nach Art der Leitung oder dessen Anwendung geführt werden. In einer bevorzugten Vorrichtung sind mehrere Leitungen parallel angeordnet.

Bevorzugt sind diese Leitungen wenigstens abschnittsweise miteinander verbunden um die Handhabung während des Wickelvorgangs zu erleichtern, z.B. wenigstens im auf- und abwickelbaren Bereich seitlich parallel zueinander, so dass sie im abgewickelten Zustand eine gerade Leitung bilden.

In einer Ausführungsform sind mehrere Leitungen im Bereich zwischen dem ersten und dem zweiten Ende des Leitungsträgers derart miteinander verbunden sind, dass sie selbst eine (dem Leitungsträger wie oben beschrieben entsprechende) Helix bilden. In diesem Fall kann der Leitungsverbund selbst den Leitungsträger darstellen/ersetzen.

### Kurze Beschreibung der Figur

Im Folgenden wird nun eine Ausgestaltung der Erfindung anhand der beiliegenden Figur beschrieben. Diese zeigt:

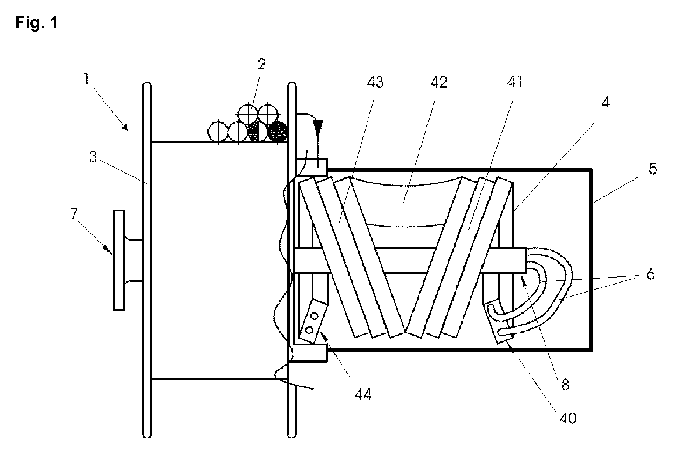

Fig. 1 einen Teilquerschnitt einer Ausführung der Erfindung.

Weitere Einzelheiten und Vorteile der Erfindung können der nachfolgenden ausführlichen Beschreibung möglicher Ausführungsformen der Erfindung anhand der beiliegenden Figur entnommen werden.

### Beschreibung einer Ausgestaltung der Erfindung

Die in der Fig. 1, zur Illustration der Erfindung, gezeigte Vorrichtung 1 zum Ab- und Aufwickeln einer oder mehreren Leitungen 2 umfasst einen drehbaren Wickelkörper, hier in Form einer Trommel 3, sowie einem koaxial angeordneten flexiblen Leitungsträger 4. In der in Fig. 1 gezeigten Variante ist der Leitungsträger neben der Trommel 3 angeordnet und durch ein Gehäuse 5 geschützt. Das Gehäuse 5 ist in diesem Fall an der drehbaren Trommel 3 befestigt.

Die Leitungen führen über den ersten, festen Verbindungspunkt 7 durch einen koaxial zur Trommel angeordnetes Rohr 8 zum Leitungsträger 4. Die Helix des Leitungsträgers 4 ist derart angeordnet, dass sich zwei gegenläufige Teilhelices 41 und 43 um einen Wendepunkt 42 ergeben. Die Leitung 2 wird vom einem ersten festen Verbindungspunkt 7 über ein erstes feststehendes Ende 40 des Leitungsträgers zu dessen zweiten mit der Trommel 3 drehbaren Ende 44 entlang der Helix geführt (die Adern 6 sind in diesem Bereich nicht in Fig. 1 dargestellt). Dabei können die einzelnen Adern 6 der mehradrigen Leitung 2 im Bereich des Leitungsträgers einzeln wie in Fig. 1 oder im Leitungsverbund geführt werden.

### Zeichenerklärung:

- 1: Vorrichtung zum Ab- und Aufwickeln einer oder mehreren Leitungen
- 2: Leitungen (auf der Trommel)
- 3: Trommel
- 4: Leitungsträger
- 40: Erstes, feststehende Ende des Leitungsträgers
- 41: Teilhelix
- 42: Wendepunkt
- 43: Teilhelix
- 44: Zweites, drehbare Ende des Leitungsträgers
- 5: Gehäuse
- 6: Leitungen (im Bereich des Leitungsträgers)
- 7: erster Verbindungspunkt

## Patentansprüche

1. Vorrichtung zum Ab- und Aufwickeln einer oder mehreren Leitungen zur unterbrechungsfreien Verbindung jeder der einen oder mehreren Leitungen zwischen zwei Verbindungspunkten, wobei die unterbrechungsfreie Verbindung zwischen einem festen ersten Verbindungspunkt und einem variabel entfernten oder jeweils einem von mehreren unterschiedlich entfernten zweiten Verbindungspunkt herstellbar ist, **dadurch gekennzeichnet, dass** die Vorrichtung einen drehbaren Wickelkörper sowie einen koaxial angeordneten flexiblen Leitungsträger umfasst der eine Helix bildet und derart angeordnet ist, dass sich zwei gegenläufige Teilhelices um einen Wendepunkt ergeben, dass die Leitung(en) vom ersten festen Verbindungspunkt über ein erstes Ende des Leitungsträgers zu dessen zweiten Ende entlang der Helix geführt wird/werden, dass die Leitung(en) vom zweiten Ende des Leitungsträgers zur Umfangsseite des Wickelkörpers geführt wird/werden und dass die Leitung(en), ggf. über eine Anzahl Wicklungen, um den Wickelkörper zum zweiten Verbindungspunkt geführt wird/werden.

2. Vorrichtung nach Anspruch 1, wobei der Leitungsträger als flexibles Band ausgebildet ist, bevorzugt als Vollmaterial oder Gewebe, vorzugsweise aus Kunststoff.

3. Vorrichtung nach Anspruch 1 oder 2, wobei die eine oder mehreren elektrischen und/oder fluidführenden Leitungen in bevorzugt regelmäßigen Abständen am Leitungsträger befestigt ist/sind.

4. Vorrichtung nach Anspruch 3, wobei die Befestigung der einen oder mehreren elektrischen und/oder fluidführenden Leitungen am Leitungsträger mittels Bügel, Schleifen, Rastmittel und/oder Brücken erfolgt.

5. Vorrichtung nach einem der Ansprüche 1 bis 4, wobei der Wickelkörper als hohler Zylinder, bevorzugt als Trommel ausgebildet ist.

6. Vorrichtung nach Anspruch 5, wobei der erste Teilabschnitt der Leitung(en) seitlich dieses hohlen Zylinders, bzw. dieser Trommel angeordnet ist.

7. Vorrichtung nach Anspruch 5, wobei der koaxial angeordnete flexible Leitungsträger innerhalb dieses hohlen Zylinders, bzw. dieser Trommel angeordnet ist.

8. Vorrichtung nach einem der Ansprüche 1 bis 7, wobei mehrere elektrische und/oder fluidführende Leitungen wenigstens abschnittweise parallel, verdrillt, koaxial oder gemischt parallel, verdrillt und/oder koaxial miteinander verbunden sind.

9. Vorrichtung nach einem der Ansprüche 1 bis 8, wobei mehrere elektrische und/oder fluidführende Leitungen parallel angeordnet sind.

10. Vorrichtung nach Anspruch 9, wobei die mehreren Leitungen wenigstens abschnittweise seitlich verbunden sind.

11. Vorrichtung nach Anspruch 10, wobei die wenigstens abschnittweise seitlich verbundenen Leitungen im Bereich zwischen dem ersten und dem zweiten Ende des Leitungsträgers derart miteinander verbunden sind, dass sie eine Helix bilden.

12. Vorrichtung nach Anspruch 11, wobei die wenigstens abschnittweise seitlich verbundenen eine Helix bildende Leitungen den Leitungsträger darstellen.

13. Vorrichtung nach einem der Ansprüche 1 bis 12, wobei der mittlere Durchmesser der Helix des Leitungsträgers d kleiner als der mittlere Durchmesser des Wickelkörpers D ist, bevorzugt 1,1 d < D < 100 d, ganz besonders bevorzugt 1,5 d < D < 50 d und insbesondere 2 d < D < 25 d.

14. Vorrichtung nach einem der Ansprüche 1 bis 13, wobei die Leitungen energie-, informations-/signal- oder stoffführende Leitungen sind, z.B. ein- oder mehradrige Elektrokabel, ein- oder mehradrige galvanische oder optische Leiter, ein- oder mehrfach Gas-, Flüssigkeits- oder Feststoff(druck)schläuche.
